# EUROPÄISCHE PATENTSCHRIFT

(11) **EP 1 557 600 B1**
(45) Veröffentlichungstag und Bekanntmachung des Hinweises auf die Patenterteilung: **07.02.2007**
(21) Anmeldenummer: 04029766.5
(22) Anmeldetag: 16.12.2004
(51) Int. Cl.: F16L 37/088

(54) **Steckkupplung zum Anschliessen einer Fluidleitung an einem Rohr**
Socket joint for connecting a fluid line with a pipe
Raccord à manchon pour connecter une conduite de fluide avec un tuyau

(30) Priorität: 24.01.2004 DE 102004003693
(43) Veröffentlichungstag der Anmeldung: 27.07.2005
(73) Patentinhaber: Rasmussen GmbH, 63477 Maintal (DE)
(72) Erfinder: Bauer, Andreas, 63477 Maintal (DE)
(74) Vertreter: Knoblauch, Andreas

(56) Entgegenhaltungen:
- EP-A- 1 143 187
- WO-A-98/59192
- DE-A1- 19 609 925

## Beschreibung

Die Erfindung bezieht sich auf eine Steckkupplung zum Anschließen einer Fluidleitung an einem Rohr, mit einem Rohrstück, dessen einer Endabschnitt mit der Fluidleitung verbindbar ist und in dessen anderen Endabschnitt das Rohr unter Verrastung einsteckbar und darin durch wenigstens einen im Rohrstück eingesetzten Dichtring abgedichtet ist, der zwischen einem im Rohrstück befestigten Sicherungsring und einer inneren Schulter des Rohrstücks in seiner Lage gesichert ist.

Bei einer aus EP 1143187 A bekannten gattungsbildenden Steckkupplung ist der Sicherungsring radial innen mit einer umlaufenden flachen Rippe versehen, die in eine passende Ringnut des der Aufnahme des Rohres dienenden Endabschnitts durch Zusammenstecken von Sicherungsring und Rohrstück nach dem Einführen des Dichtungsrings einrastet. Diese Rastverbindung hält keinen hohen Axialkräften beim Herausziehen des Rohres aus dem Rohrstück stand.

Es ist auch bekannt, den Sicherungsring im Rohrstück einzuschweißen. Diese Art der Verbindung von Sicherungsring und Rohrstück ist ebenfalls nicht hinreichend haltbar, weil sich das Rohrstück nicht immer genau rund herstellen und der Sicherungsring sich nicht gleichmäßig anschweißen läßt. Auch hierbei kann der Sicherungsring beim Lösen der Steckkupplung zusammen mit dem in das Rohrstück eingeführten Rohr aus dem Rohrstück herausgezogen werden.

Aus der DE 196 09 925 A1 (Fig. 1) ist eine Steckkupplung bekannt, die zum Anschließen einer Fluidleitung an einem Rohr dient. Die Steckkupplung weist ein Rohrstück auf, dessen einer Endabschnitt mit der Fluidleitung verbunden ist und in dessen anderen Endabschnitt das Rohr unter Verrastung einsteckbar und darin durch wenigstens einen im Rohrstück eingesetzten Dichtring abgedichtet ist, der zwischen einem im Rohrstück befestigten Sicherungsring und einer inneren Schulter des Rohrstücks in seiner Lage gesichert ist. Das Rohrstück weist einen sich in Umfangsrichtung des Rohrstücks erstreckenden Schlitz auf, der den Sicherungsring, unter Anlage an einer dem Schlitz gegenüberliegenden Stützfläche des Rohrstücks, aufnimmt. Der Sicherungsring ist elastisch und am Umfang mit sich diametral gegenüberliegenden Radialhaken versehen. Er wird axial in das Rohrstück eingeschoben, wobei die Radialhaken einerseits in eine innere Nut oder Vertiefung und andererseits in dem Umfangsschlitz einrasten. Um den Sicherungsring zum Auswechseln des Dichtrings aus dem Rohrstück zu entfernen, soll er entweder zerstört werden, oder es soll versucht werden, ihn über den Schlitz soweit zusammenzudrücken, daß die Radialhaken mit dem Schlitz außer Eingriff kommen. Da die Radialhaken jedoch nicht nur in den Schlitz eingreifen, sondern auch in die dem Schlitz gegenüberliegenden Nut oder Vertiefung, ist eine Entnahme des Sicherungsrings offensichtlich nur nach seiner Zerstörung möglich, was ersichtlich materialaufwendig ist. Würden die Radialhaken nur in den Schlitz einrasten, wäre keine hinreichende Sicherheit der Lage des Sicherungsrings und des Dichtrings gegen eine reibschlüssige Mitnahme des Dichtrings und damit auch des Sicherungsrings durch das Rohr beim Entkuppeln gewährleistet. Außerdem ist die Entnahme des Sicherungsrings unter gleichzeitiger radialer Zusammendrückung äußerst schwierig.

Der Erfindung liegt die Aufgabe zugrunde, eine Steckkupplung der eingangs erwähnten Art anzugeben, bei der die Verbindung von Sicherungsring und Rohrstück höheren Axialzugkräften standhält.

Erfindungsgemäß ist diese Aufgabe dadurch gelöst, daß das Rohrstück einen sich in Umfangsrichtung des Rohrstücks erstreckenden Schlitz aufweist, durch den der Sicherungsring, bis zur Anlage an einer dem Schlitz gegenüberliegenden Stützfläche des Rohrstücks, eingeführt und in diesem mit einem Umfangsabschnitt aufgenommen ist.

Bei dieser Lösung liegt der Sicherungsring zu einem großen Teil, der etwa dem halben Umfang des Sicherungsrings entspricht (damit er durch den Schlitz hindurchgeführt werden kann), in dem Schlitz, dessen Tiefe der Wanddicke des Rohrstücks entspricht. Der Sicherungsring ist daher sehr fest formschlüssig mit dem Rohrstück verbunden. Die Verbindung hält mithin höheren Axialzugkräften stand als eine Rastverbindung, die auch auf Reibschluß oder einem elastischen Formschluß beruht, und eine mangelhafte Schweißverbindung.

Vorzugsweise ist dafür gesorgt, daß der Sicherungsring auf seiner der Einführung des Rohres dienenden Öffnung des Rohrstücks zugekehrten Seite gegenüber dem Schlitz durch einen teilweise an der Innenseite des Rohrstücks umlaufenden, flachen Wulst gesichert ist. Durch diesen Wulst wird eine zusätzliche formschlüssige Verbindung auch des durch den Schlitz hindurchgeführten Teils des Sicherungsrings mit dem Rohrstück erreicht. Die Axialbelastbarkeit der Verbindung ist daher noch höher.

Vorzugsweise ist der Sicherungsring auf Seiten des Schlitzes mit der Umfangsfläche des Rohrstücks bündig. Der Sicherungsring wird daher nicht nur durch die gesamte Schlitztiefe axial abgestützt, sondern erspart auch Bauraum und behindert nicht beim Lösen der Steckkupplung das Herausziehen eines das Rohr üblicherweise im Rohrstück sichernden Haltebügels.

Ferner kann dafür gesorgt sein, daß der Sicherungsring beim Einführen in den Schlitz in der Endlage im Schlitz einrastet oder reibschlüssig gehalten wird. Dadurch wird die Einbaulage des Sicherungsrings in radialer Richtung gesichert. Er kann daher nicht von selbst durch Schwerkraft aus dem Schlitz herausfallen.

Sodann kann der Sicherungsring auf seiner dem Schlitz abgekehrten Seite einen Vorsprung aufweisen, der in eine zumindest teilweise durchgehende Ausnehmung des Rohrstücks eingreift. Dies steigert die Axialbelastbarkeit der Verbindung von Sicherungsring und Rohrstück noch weiter.

Zusätzlich können der Vorsprung und die Ausnehmung gegenseitig verrastbar sein. Auch dies verhindert ein Herausfallen des Sicherungsrings aus dem Schlitz durch Schwerkraft.

Sodann ist es günstig, wenn der Sicherungsring außerhalb des Schlitzes mit axial vorstehenden Haken versehen ist, die jeweils eine Schulter auf der Außenseite des Rohrstücks beiderseits des Schlitzes übergreifen. Diese Haken verhindern ein Aufspreizen des Schlitzes bei sehr hoher Axialbelastung der Verbindung von Rohrstück und Sicherungsring.

Die Enden des Schlitzes sind vorzugsweise jeweils durch einen nach außen gewölbten Steg überbrückt. Dadurch wird ein Einreißen des Schlitzes an seinen Enden durch eine hohe Axialzugkraft verhindert.

Vorzugsweise ist ferner dafür gesorgt, daß der Sicherungsring auf einander abgekehrten Seiten seines Umfangs sich parallel zu seiner Einführungsrichtung erstreckende Rippen aufweist, die exzentrisch zur Mittelebene des Sicherungsrings liegen und in ihnen entsprechende Aussparungen an den Schlitzenden passen. Dies erleichtert ein lagerichtiges Einführen des Sicherungsrings in den Schlitz, wenn der Sicherungsring, wie üblich, mit einer Einführungsschrägfläche auf einer Seite versehen ist.

Die Erfindung und ihre Weiterbildungen werden nachstehend anhand der beiliegenden Zeichnungen bevorzugter Ausführungsbeispiele näher beschrieben. Darin stellen dar:
- Fig. 1: einen Axialschnitt eines ersten Ausführungsbeispiels einer erfindungsgemäßen Steckkupplung,
- Fig. 2: eine Vorderansicht der Steckkupplung nach Fig. 1,
- Fig. 3: eine perspektivische Ansicht der Steckkupplung nach Fig. 1,
- Fig. 4: eine Vorderansicht eines Sicherungsrings der Steckkupplung nach Fig. 1,
- Fig. 5: die Unteransicht des Sicherungsrings nach Fig. 4,
- Fig. 6: die Draufsicht des Sicherungsrings nach Fig. 4,
- Fig. 7: einen Axialschnitt eines weiteren Ausführungsbeispiels einer erfindungsgemäßen Steckkupplung,
- Fig. 8: die Vorderansicht der Steckkupplung nach Fig. 7,
- Fig. 9: eine perspektivische Ansicht der Steckkupplung nach Fig. 7,
- Fig. 10: die Vorderansicht eines Sicherungsrings der Steckkupplung nach Fig. 7,
- Fig. 11: die Unteransicht des Sicherungsrings nach Fig. 10 und
- Fig. 12: den Schnitt XII-XII der Fig. 10.

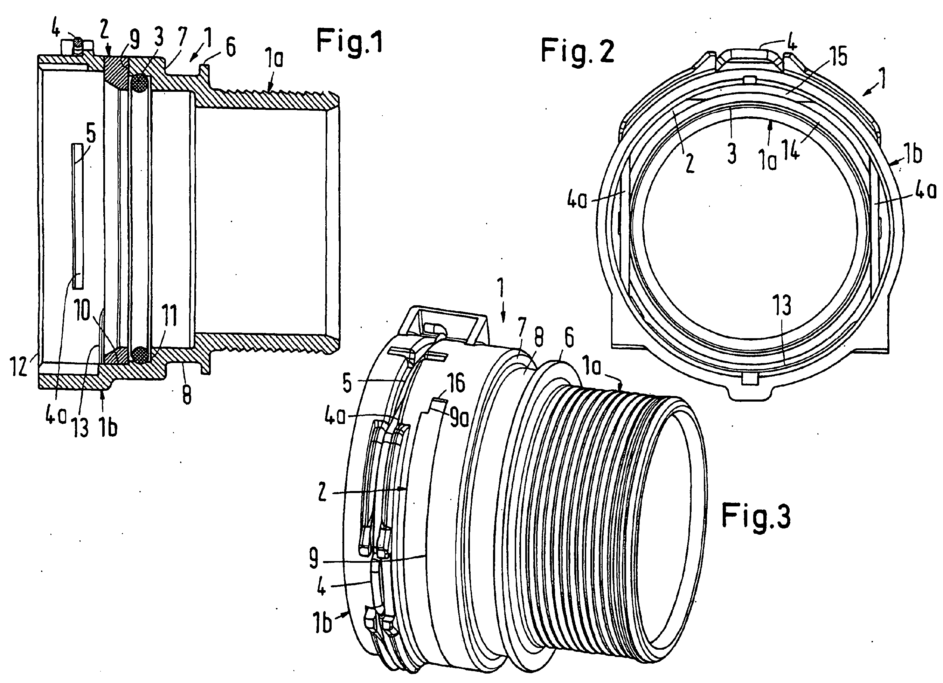

Das in den Fig. 1 bis 5 dargestellte Ausführungsbeispiel einer erfindungsgemäßen Steckkupplung besteht aus einem Rohrstück 1 aus Kunststoff, einem Sicherungsring 2 aus Kunststoff, einem Dichtring 3 und einem Haltebügel 4 aus Federstahl.

Das Rohrstück 1 hat einen gerippten Endabschnitt 1a, auf den eine elastische Fluidleitung aufgeschoben wird und erforderlichenfalls zusätzlich mittels einer Schelle festgeklemmt werden kann.

In den anderen Endabschnitt 1b des Rohrstücks 1 ist ein (nicht dargestelltes) Rohr einführbar, z.B. ein Rohrstutzen eines Kühlers eines Kraftfahrzeugmotors. Durch die Fluidleitung, das Rohrstück 1 und das Rohr bzw. den Rohrstutzen wird dann das Kühlwasser des Kraftfahrzeugmotors geleitet.

Der zwischen dem Endabschnitt 1a und dem Dichtring 3 liegende Abschnitt des Rohrstücks 1 hat einen größeren Innendurchmesser als der Endabschnitt 1a. Das Rohr wird bis gegen die Schulter des Endabschnitts 1a in den Endabschnitt 1b eingeführt und durch den Dichtring 3 gegen den Endabschnitt 1b abgedichtet und durch den Haltebügel 4 gesichert, der mit seinen Schenkeln 4a durch sich diametral gegenüberliegende Schlitze 5 parallel zu einer Tangente des Endabschnitts 1b hindurchgeführt ist und in eine Umfangsnut des Rohres eingreift. Das heißt, beim Einführen des Rohres in den Endabschnitt 1b des Rohrstücks 1 drückt das Rohr die Schenkel 4a auseinander, bis das Rohr so weit eingeführt ist, daß die Schenkel in der Umfangsnut einrasten.

Ein umlaufender Bund 6 am Ende des Endabschnitts 1b dient als Anschlag für die Fluidleitung, wenn sie auf den gerippten Endabschnitt 1a aufgeschoben wird, und begrenzt zusammen mit einer Schulter 7 des Endabschnitts 1b eine umlaufende Nut 8.

Der Endabschnitt 1b des Rohrstücks 1 hat ferner einen sich in Umfangsrichtung des Rohrstücks 1 erstreckenden Schlitz 9, in den der Sicherungsring 2 bis zur Anlage an einer dem Schlitz 9 gegenüberliegenden Stützfläche 10 des Rohrstücks 1 eingeführt wird. Der Sicherungsring 2 ragt dann mit seinem inneren Umfang so weit nach innen, daß er zusammen mit einer inneren Schulter 11 eine Ringnut begrenzt, in der der Dichtring 3 aufgenommen und durch den Sicherungsring 2 in seiner Lage gehalten wird.

Der Sicherungsring 2 ist ferner auf seiner der Einführung des Rohres dienenden Öffnung 12 des Rohrstücks 1 zugekehrten Seite gegenüber dem Schlitz 9 durch einen teilweise an der Innenseite des Rohrstücks 1 umlaufenden, flachen Wulst 13 gesichert. Auf Seiten des Schlitzes 9 ist der Sicherungsring 2 mit der Umfangsfläche des Rohrstücks 1 bündig. Er erspart dadurch Bauraum und behindert auch nicht das Herausziehen des Haltebügels aus dem Rohrstück 1, um die Steckverbindung zu lösen. Erst nach dem Herausziehen des Rohres aus dem Rohrstück kann der Sicherungsring 2 von innen nach außen gedrückt werden.

Ferner hat der Sicherungsring 2 innen eine Schrägfläche 14, die der Einführungsöffnung 12 zugekehrt ist, um das Einführen des Rohres zu erleichtern. Auf der einen Seite des im Schlitz 9 liegenden Abschnitts des Sicherungsrings 2 ist er ebenfalls mit einer gering, um nur etwa 1,6°, geneigten Schrägfläche 15 versehen, wobei der Sicherungsring am radial äußeren Rand der Schrägfläche 15 um etwa 0,2 mm dicker als am radial inneren Rand und auch entsprechend dicker als die axiale Breite des Schlitzes 9 ist. Dadurch wird der Sicherungsring nach der Einführung in den Schlitz 9 reibschlüssig bzw. im Preßsitz in dem Schlitz 9 gehalten, so daß er nicht von selbst herausfallen kann. Anstelle des reibschlüssigen Sitzes kann der Sicherungsring 2 auch im Schnappsitz in dem Schlitz 9 verrastet sein, z.B. durch gegensinnige Hinterschneidungen von Sicherungsring 2 und Schlitz 9.

Die Halterung des Sicherungsrings 2 im Schlitz 9 und gegebenenfalls zusätzlich durch den Wulst 13 hat gegenüber einer Einführung des Sicherungsrings 2 durch die Öffnung 12 und seiner Arretierung im Endabschnitt 1b im Schnappsitz oder durch Einschweißen den Vorteil, daß die Halterung sicherer ist, so daß er beim Herausziehen des Rohres aus dem Endabschnitt 1b des Rohrstücks 1 nicht, gegebenenfalls zusammen mit dem Dichtring 3, durch das Rohr aus dem Rohrstück 1 herausgezogen werden kann.

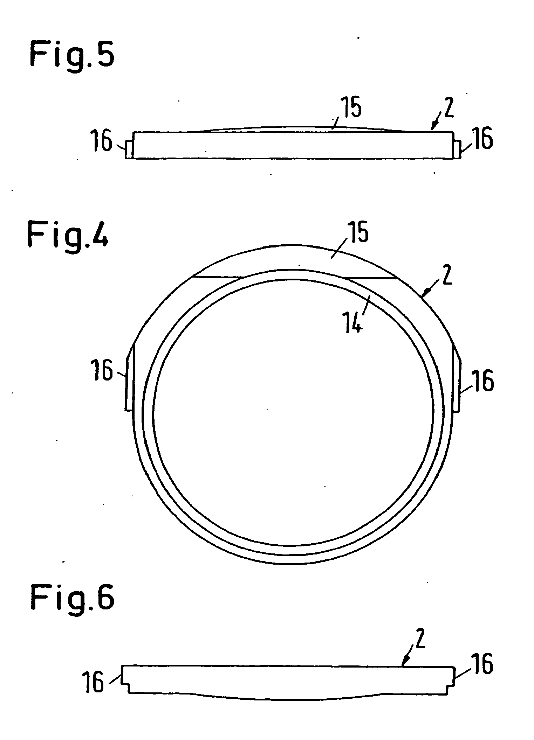

Wie die Fig. 3 bis 6 deutlicher zeigen, ist der Sicherungsring 2 auf einander abgekehrten Seiten seines Umfangs mit sich parallel zu seiner Einführungsrichtung erstreckenden Rippen 16 versehen, die nach den Fig. 5 und 6 exzentrisch zur Mittelebene des Sicherungsrings 2 liegen und in ihnen entsprechende, zur Schlitzebene exzentrische Aussparungen 9a an den Schlitzenden passen. Dies erleichtert ein lagerichtiges Einführen des Sicherungsrings 2 in den Schlitz 9 in der Weise, daß die der zentrierten Einführung des Rohres dienende Schrägfläche 14 immer der Öffnung 12 zugekehrt ist.

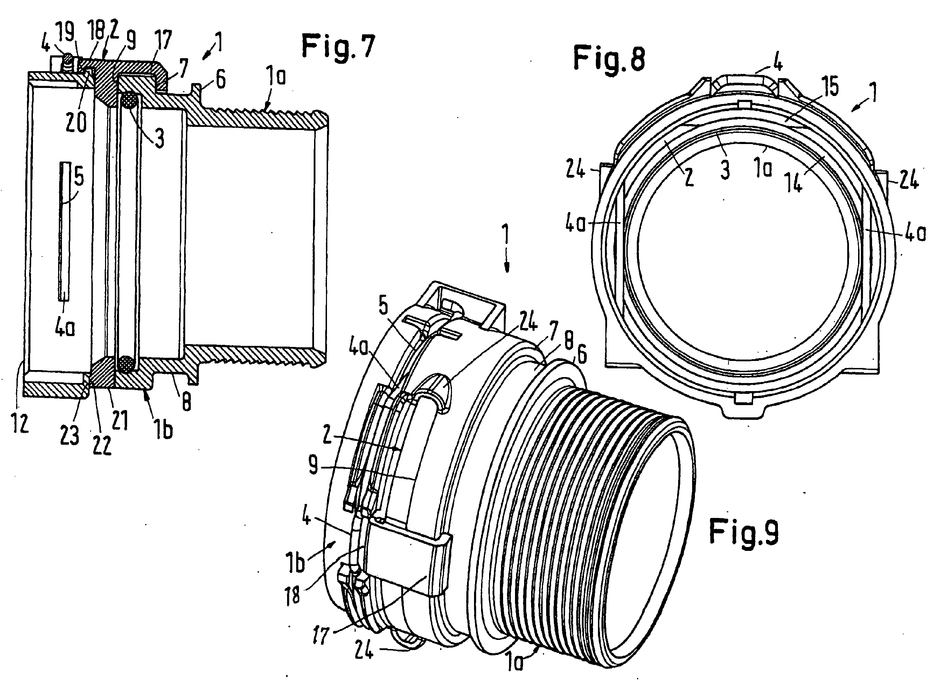

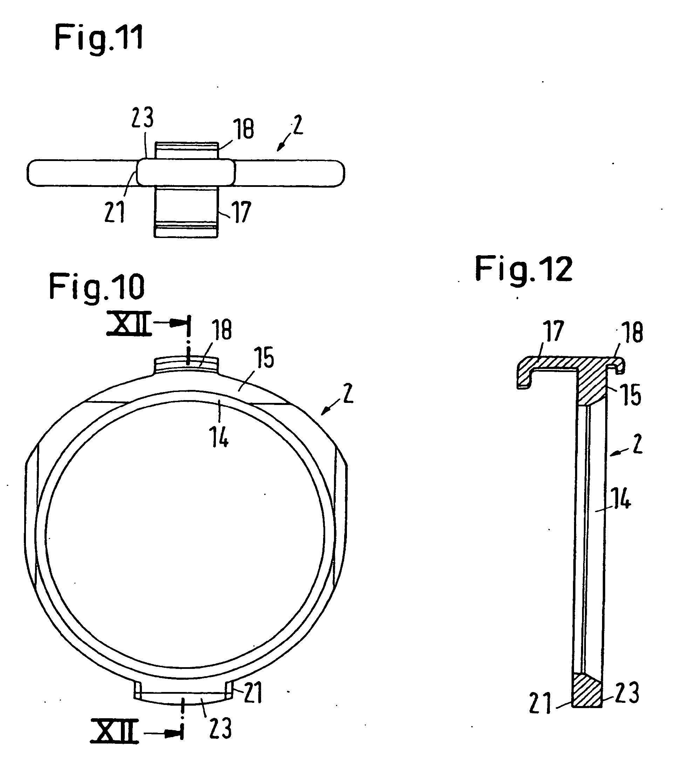

Das Ausführungsbeispiel nach den Fig. 7 bis 12 unterscheidet sich von dem ersten Ausführungsbeispiel im wesentlichen dadurch, daß der Sicherungsring 2 außerhalb des Schlitzes 9 mit axial vorstehenden Haken 17 und 18 versehen ist, die gemäß Fig. 7 jeweils die Schulter 7 und eine Schulter 19 eines Bundes 20 auf der Außenseite des Rohrstücks 1 beiderseits des Schlitzes 9 übergreifen und dadurch den Schlitz 9 beim Herausziehen des Rohres aus dem Rohrstück 1 (Lösen der Steckkupplung) gegen eine Aufweitung zusammenhalten. Ferner ist der Sicherungsring 2 auf seiner dem Schlitz 9 abgekehrten Seite mit einem Vorsprung 21 versehen, der in eine zumindest teilweise durchgehende (hier vollständig durchgehende) Ausnehmung 22 des Rohrstücks 1 ragt (Fig. 7, 10 und 12). Der Vorsprung 21 und die Ausnehmung 22 sind außerdem gegensinnig verrastbar, hier durch eine flache Stufe 23 des Vorsprungs 21 und eine entsprechende Hinterschneidung in der Ausnehmung 22. Auch dadurch wird ein Herausfallen des Sicherungsrings 2 aus dem Schlitz 9 durch Schwerkraft - zusätzlich zu der Schrägfläche 15 - verhindert.

Außerdem sind die Enden des Schlitzes 9 bei dem zweiten Ausführungsbeispiel jeweils durch einen nach außen gewölbten Steg 24 überbrückt, die zusätzlich zu den Haken 17, 18 ein Aufreißen des Schlitzes 9 an seinen Enden verhindern. Derartige Stege 24 können auch bei dem ersten Ausführungsbeispiel vorgesehen sein.

Die Rippen 16 des Sicherungsrings 2 des ersten Ausführungsbeispiels sind dagegen bei dem zweiten Ausführungsbeispiel nicht vorgesehen, können aber ebenfalls vorgesehen sein, ebenso wie die Aussparungen 9a an den Enden des Schlitzes 9.

## Patentansprüche

1. Steckkupplung zum Anschließen einer Fluidleitung an einem Rohr, mit einem Rohrstück (1), dessen einer Endabschnitt (1a) mit der Fluidleitung verbindbar ist und in dessen anderen Endabschnitt (1b) das Rohr unter Verrastung einsteckbar und darin durch wenigstens einen im Rohrstück (1) eingesetzten Dichtring (3) abgedichtet ist, der zwischen einem im Rohrstück (1) befestigten Sicherungsring (2) und einer inneren Schulter (11) des Rohrstücks (1) in seiner Lage gesichert ist, **dadurch gekennzeichnet, daß** das Rohrstück (1) einen sich in Umfangsrichtung des Rohrstücks (1) erstreckenden Schlitz (9) aufweist, durch den der Sicherungsring (2), bis zur Anlage an einer dem Schlitz (9) gegenüberliegenden Stützfläche (10) des Rohrstücks (1), eingeführt und in diesem mit einem Umfangsabschnitt aufgenommen ist.

2. Steckkupplung nach Anspruch 1, **dadurch gekennzeichnet, daß** der Sicherungsring (2) auf seiner der Einführung des Rohres dienenden Öffnung (12) des Rohrstücks (1) zugekehrten Seite gegenüber dem Schlitz (9) durch einen teilweise an der Innenseite des Rohrstücks (1) umlaufenden, flachen Wulst (13) gesichert ist.

3. Steckkupplung nach Anspruch 1 oder 2, **dadurch gekennzeichnet, daß** der Sicherungsring (2) auf Seiten des Schlitzes (9) mit der Umfangsfläche des Rohrstücks (1) bündig ist.

4. Steckkupplung nach einem der Ansprüche 1 bis 3, **dadurch gekennzeichnet, daß** der Sicherungsring (2) beim Einführen in den Schlitz (9) in der Endlage im Schlitz (9) einrastet oder reibschlüssig gehalten wird.

5. Steckkupplung nach Anspruch 1, **dadurch gekennzeichnet, daß** der Sicherungsring (2) auf seiner dem Schlitz (9) abgekehrten Seite einen Vorsprung (21) aufweist, der in eine zumindest teilweise durchgehende Ausnehmung (22) des Rohrstücks (1) eingreift.

6. Steckkupplung nach Anspruch 5, **dadurch gekennzeichnet, daß** der Vorsprung (21) und die Ausnehmung (22) gegenseitig verrastbar sind.

7. Steckkupplung nach Anspruch 5 oder 6, **dadurch gekennzeichnet, daß** der Sicherungsring (2) außerhalb des Schlitzes (9) mit axial vorstehenden Haken (17, 18) versehen ist, die jeweils eine Schulter (7, 19) auf der Außenseite des Rohrstücks (1) beiderseits des Schlitzes (9) übergreifen.

8. Steckkupplung nach einem der Ansprüche 1 bis 7, **dadurch gekennzeichnet, daß** die Enden des Schlitzes (9) jeweils durch einen nach außen gewölbten Steg (24) überbrückt sind.

9. Steckkupplung nach einem der Ansprüche 1 bis 8, **dadurch gekennzeichnet, daß** der Sicherungsring (2) auf einander abgekehrten Seiten seines Umfangs sich parallel zu seiner Einführungsrichtung erstreckende Rippen (16) aufweist, die exzentrisch zur Mittelebene des Sicherungsrings (2) liegen und in ihnen entsprechende Aussparungen (9a) an den Schlitzenden passen.

## Claims

1. A plug-in coupling for connecting a fluid conduit to a pipe, the plug-in coupling comprising a pipe section (1), one end section (1a) of which is connectable to a fluid conduit and into its other end section (1b) a pipe is insertable with a snap-action and sealed therein by at least one sealing ring (3) inserted therein, the sealing ring (3) being positionally secured in the pipe section (1) between the securing ring (2) and an inner shoulder (11) of the pipe section (1), **characterized in that** the pipe section (1) has a slot (9) extending in a circumferential direction of the pipe section (1) and a support surface (10) located opposite the slot (9); wherein the securing ring (2) is inserted into the slot (9) until the securing ring (2) contacts the support surface (10) and wherein a circumferential section of the securing ring (2) is received in the slot (9).

2. Plug-in coupling according to claim 1, **characterized in that** the inner side of the pipe section (1) is provided oppositely to the slot (9) with a flat bead (13) that extends partially circumferentially on the inner side of the pipe section (1), wherein the side of the securing ring (2), which side faces the opening (12) of the pipe section (1) through which opening (12) the pipe is inserted into the pipe section, is secured by the flat bead (13).

3. Plug-in coupling according to claim 1 or 2, **characterized in that** the securing ring (2) at the side of the pipe section (1) where the slot (9) is located is flush with an outer circumferential surface of the pipe section.

4. Plug-in coupling according to claim 1, **characterized in that** the securing ring (2) when inserted into the slot (9) is secured in the end position by snapping or by friction in the slot.

5. Plug-in coupling according to claim 1, **characterized in that** the securing ring (2) on the side remote from the slot (9) has a projection (21) engaging a recess (22) in the pipe section (1), the recess (22) at least partially passing through the wall of the pipe section (1).

6. Plug-in coupling according to claim 5, **characterized in that** the projection (21) and the recess (22) are lockable relative to one another.

7. Plug-in coupling according to claim 5 or 6, **characterized in that** the securing ring (2) is, outside of the slot (9), provided with axially projecting hooks (17, 18), wherein the pipe section (1) has a first shoulder (7) and a second shoulder (19) arranged on opposite sides of the slot (9), the axially projecting hooks engaging across the first and second shoulders (7, 19), respectively.

8. Plug-in coupling according to any of the claims 1 to 7, **characterized in that** the ends of the slot (9) are respectively bridged by an outwardly curved stay (24).

9. Plug-in coupling according to any of the claims 1 to 8, **characterized in that** the securing ring (2) has ribs (16) on opposed circumferential sides, wherein the ribs (16) extend parallel to a direction of insertion of the securing ring (2) into the slot (9), wherein the ribs (16) are positioned eccentrically to a central plane of the securing ring (2), and wherein the slot (9) ends have recesses matching the ribs.

## Revendications

1. Raccord à enfichage pour connecter une conduite fluidique à un tube, comportant une tubulure (1) dont un tronçon terminal (1a) peut être relié à la conduite fluidique et dans l'autre tronçon terminal (1b) de laquelle le tube peut être enfiché par enclenchement et est étanché dans celui-ci par au moins un joint d'étanchéité (3) inséré dans la tubulure (1), joint d'étanchéité qui est assuré dans sa position entre une bague de sécurité (2) fixée sur la tubulure (1) et un épaulement intérieur (11) de la tubulure (1), **caractérisé en ce que** la tubulure (1) présente une fente (9) s'étendant en direction périphérique de la tubulure (1), à travers laquelle la bague de sécurité (2) est introduite jusqu'à venir en appui sur une surface de soutien (10), opposée à la fente (9), de la tubulure (1) et est reçue dans cette dernière par un tronçon périphérique.

2. Raccord à enfichage selon la revendication 1, **caractérisé en ce que**, sur sa face tournée vers l'ouverture (12) de la tubulure servant à l'introduction du tube, la bague de sécurité (2) est assurée vis-à-vis de la fente (9) par un bourrelet (13) plat en partie périphérique sur la face intérieure de la tubulure (1).

3. Raccord à enfichage selon la revendication 1 ou 2, **caractérisé en ce que**, sur les côtés de la fente (9), la bague de sécurité (2) est en affleurement avec la surface périphérique de la tubulure (1).

4. Raccord à enfichage selon l'une des revendications 1 à 3, **caractérisé en ce que**, lorsqu'elle est introduite dans la fente (9), la bague de sécurité (2), dans la position terminale, s'enclenche dans la fente (9) ou est maintenue dans celle-ci par coopération par friction.

5. Raccord à enfichage selon la revendication 1, **caractérisé en ce que**, sur sa face détournée de la fente (9), la bague de sécurité (2) présente une saillie (21) qui s'engage dans un évidement (22) au moins partiellement continu de la tubulure (1).

6. Raccord à enfichage selon la revendication 5, **caractérisé en ce que** la saillie (21) et l'évidement (22) sont susceptibles de s'enclencher mutuellement.

7. Raccord à enfichage selon la revendication 5 ou 6, **caractérisé en ce qu'**en dehors de la fente (9), la bague de sécurité (2) est pourvue de crochets (17, 18) faisant saillie axialement, qui coiffent chacun un épaulement (7, 19) sur la face extérieure de la tubulure (1) des deux côtés de la fente (9).

8. Raccord à enfichage selon l'une des revendications 1 à 7, **caractérisé en ce que** les extrémités de la fente (9) sont reliées chacune par une traverse (24) courbée vers l'extérieur.

9. Raccord à enfichage selon l'une des revendications 1 à 8, **caractérisé en ce que**, sur des faces détournées l'une de l'autre de sa périphérie, la bague de sécurité (2) présente des nervures (16) s'étendant parallèlement à sa direction d'introduction, qui sont situées excentriquement par rapport au plan médian de la bague de sécurité (2) et qui s'adaptent dans des échancrures (9a) qui leur correspondent aux extrémités de la fente.
